# EUROPEAN PATENT APPLICATION

(11) **EP 2 341 246 A2**
(43) Date of publication of application: **06.07.2011**
(21) Application number: 10193923.9
(22) Date of filing: 07.12.2010
(51) Int. Cl.: F03D 7/04, F03D 9/00

(54) **Method and system for monitoring operation of a wind farm**

(30) Priority: 22.12.2009 US 644228
(71) Applicant: General Electric Company, Schenectady, NY 12345 (US)
(72) Inventor: Pal, Sujan Kumar, 560066, Bangalore (IN); Kumar, Vivek, 500081, Hyderabad (IN)
(74) Representative: Bedford, Grant Richard

(57) **Abstract**

A system (100) for monitoring operation of a wind farm comprising a plurality of wind turbines (104,106,108,162,164,172,402,404,502,504,506) is provided. The system includes a central server (102) configured to operate the plurality of wind turbines. The central server includes a memory area (202) for storing threshold tables, and a processor (130,132,134,204) is programmed to receive a signal representative of a parameter indicative of an environmental condition from each wind turbine of the plurality of wind turbines, compare a monitored environmental condition to one of a plurality of threshold levels for the environmental condition, determine whether the compared environmental condition is one of above a first threshold level and below a second threshold level, and transmit a change of operation request to each wind turbine indicating the monitored environmental condition is one of above the first threshold level and below the second threshold level.

## Description

The subject matter disclosed herein relates generally to a system and method for monitoring operation of a wind farm and, more specifically, to monitoring one or more environmental conditions for a plurality of wind turbines.

Wind turbines are regarded as environmentally friendly and relatively inexpensive alternative sources of energy that utilize wind energy to produce electrical power. A wind turbine generally includes a wind rotor having a plurality of blades that transform wind energy into rotational motion of a drive shaft, which in turn is utilized to drive a rotor of an electrical generator to produce electrical power. Modem wind power generation systems typically take the form of a wind farm having multiple wind turbines that are operable to supply power to a transmission system providing power to a utility grid.

Wind is an intermittent resource and collective power output of the wind farm is significantly influenced by changes in wind conditions, as well as temperature and altitude. However, wind condition and/or temperature may change drastically in a relatively short time span. Generally, power output of a wind turbine increases with wind speed until the wind speed reaches a threshold wind speed for the turbine. With further increases in wind speed, the turbine operates at a rated power-up to a cut off value or a trip level. The rated wind speed is generally the wind speed at which dynamic loads on the wind turbine cause the mechanical components of the turbine to reach a fatigue limit that tends to shorten the lifespan of the wind turbine. However, monitoring each wind turbine in a large wind farm can be an overwhelming task as it is very difficult to monitor each wind turbine within a short period of time, and thus, quickly react to a situation where an unfavorable environmental condition is detected.

In one aspect according to the present invention, a method for monitoring operation of a wind farm including a plurality of wind turbines is provided. The method includes monitoring a parameter indicative of an environmental condition at each wind turbine of the plurality of wind turbines, transmitting, to a monitoring component, a signal representative of the parameter from each wind turbine, determining whether the monitored parameter is one of above a first threshold level and below a second threshold level, and displaying on a display device a live plot representative of the monitored environmental condition corresponding to each wind turbine.

In another aspect, a system for monitoring operation of a wind farm including a plurality of wind turbines is provided. The system includes a central server configured to operate the plurality of wind turbines. The central server includes a memory area for storing threshold tables and a processor. The processor is programmed to receive a signal representative of a parameter indicative of an environmental condition from each wind turbine of the plurality of wind turbines, compare a monitored environmental condition to one of a plurality of threshold levels for the environmental condition, determine whether the compared environmental condition is one of above a first threshold level and below a second threshold level, and transmit a change of operation request to each wind turbine indicating the monitored environmental condition is one of above the first threshold level and below the second threshold level.

In yet another aspect, one or more computer-readable media having computer-executable components is provided. The components include a monitoring component that when executed by at least one processor causes the processor to receive a signal representative of an environmental condition of each wind turbine of a plurality of wind turbines, a determining component that when executed by the processor causes the processor to determine whether the environmental condition is one of above and below a threshold level, and a display component that when executed by the processor causes the processor to display the monitored environmental condition corresponding to each wind turbine.

The present disclosure is described in detail below with reference to the attached figures, in which:
Figures 1-3 are block diagrams of exemplary systems for monitoring operation of a wind farm.
Figure 4 is an exemplary block diagram of a central server having a memory area storing components for monitoring operation of a wind farm.
Figures 5 and 6 are each an exemplary display of a live plot of a wind farm.
Figure 7 is a flow diagram of an exemplary method for monitoring operation of a wind farm.

The present disclosure provides a system and method for monitoring operation of a wind farm. In one embodiment, a central server monitors a plurality of environmental conditions within the wind farm that effect one or more wind turbines. In certain embodiments, the central server is operable to shut down each wind turbine, pitch blades on each wind turbine, and/or feather blades on each wind turbine if one or more environmental conditions rise to an unsafe level, e.g., reach or approach a threshold level. In addition, a user may be presented with an identification of each wind turbine that indicates an environmental condition at an unsafe level.

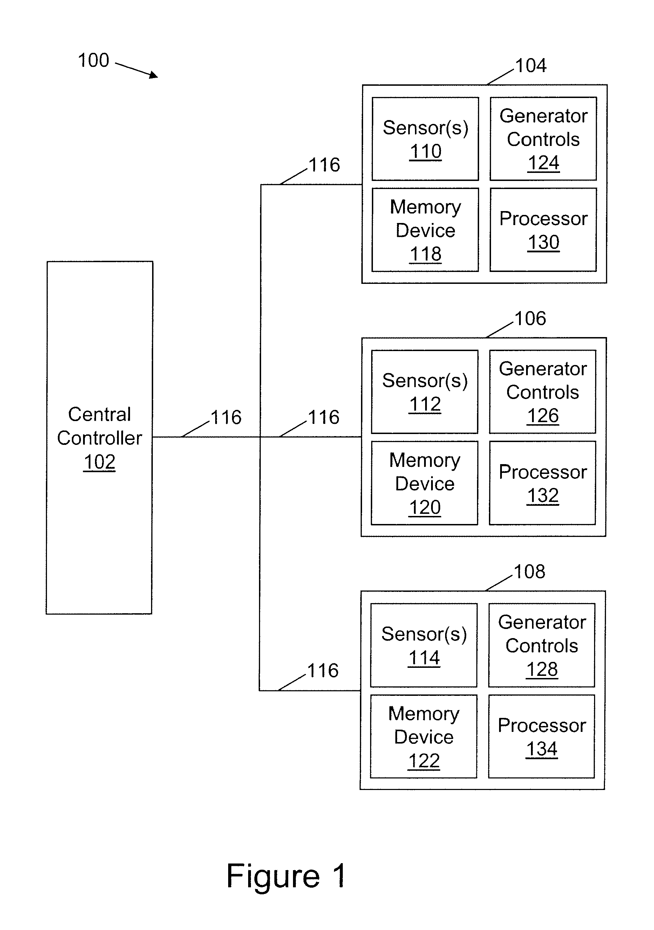

Referring initially to Figure 1, an exemplary operating environment is shown and designated generally as power system 100. Power system 100 is but one example of a suitable environment and is not intended to suggest any limitation as to the scope of use or functionality of the present disclosure. Further, power system 100 should not be interpreted as having any dependency or requirement relating to any one or combination of components illustrated herein. Power system 100 includes a central server 102 configured to communicate with wind turbines 104, 106, and 108 via communication links 116, which may be implemented in hardware and software. In one embodiment, communication links 116 are configured to remotely communicate data signals to and from central server 102 in accordance with any wired or wireless communication protocol known to one of ordinary skill in the art. Such data signals may include signals indicative of operating conditions at wind turbines 104, 106, and/or 108 transmitted to central server 102 and various command signals communicated by central server 102 to wind turbines 104, 106, and/or 108.

In the embodiment shown in Figure 1, each wind turbine 104, 106, and 108 includes one or more sensors 110, 112, and 114, respectively. In one embodiment, sensors 110, 112, and 114 sense and communicate measured environmental conditions including, without limitation, one or more of a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life.

Wind turbines 104, 106, and 108 also include memory devices 118, 120, and 122, respectively. Memory devices 118, 120, and 122 are configured to store temporal data corresponding to environmental conditions. In one embodiment, sensors 110, 112, and 114 include an anemometer configured to measure wind speed. In an alternative embodiment, wind speeds may be inferred from turbine parameters such as, for example, blade pitch, turbine power, and the like. In a further embodiment, meteorological masts may be used to measure wind speeds at a single location to facilitate determining wind speeds at individual wind turbines using wind distribution data.

Each wind turbine 104, 106, and 108 also includes processors 130, 132, and 134, respectively. Processors 130, 132, and 134 may be utilized to compute temporal averages of sensed wind speeds at different points in time. In one embodiment, the temporal averages include rolling averages of sensed wind speeds for one or more moving time windows of different durations. As an example, rolling averages may be computed for moving time windows of 10 minutes, 30 seconds, and 3 seconds. Processors 130, 132, and 134 are configured to receive a signal and execute a command in response to the received signal indicative of a request to change an operational state of a wind turbine when an environmental condition including, without limitation, one or more of a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life is one of above a first threshold level, such as a maximum threshold level, and below a second threshold level, such as a minimum threshold level, and communicate the signal to central server 102 via corresponding communication links 116. In one embodiment, a threshold level may also be any point between a maximum threshold level and a minimum threshold level. Processors 130, 132, and 134 are also in communication with various turbine and generator controls 124, 128, and 130, respectively, including, without limitation, one or more of a pitch control system, a torque control system, and a power control system, each of which are configured to alter an operational state of the corresponding wind turbine based on signals received from central server 102.

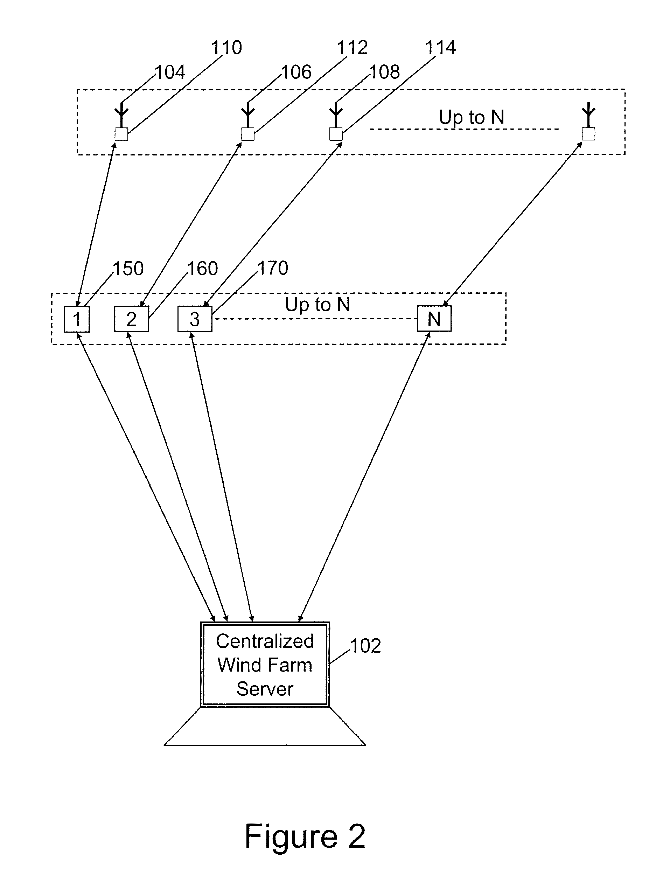

Figure 2 illustrates a further exemplary operating environment. As shown in Figure 2, a plurality of controllers (e.g., controllers 150, 160, and 170) may communicate information between central server 102 and a plurality of wind turbines (e.g., wind turbines 104, 106, and 108). In this embodiment, controller 150 communicates information from sensor 110 of wind turbine 104 to central server 102, controller 150 communicates information from central server 102 to wind turbine 104, controller 160 communicates information from sensor 112 of wind turbine 106 to central server 102, controller 160 communicates information from central server 102 to wind turbine 106, controller 170 communicates information from sensor 114 of wind turbine 108 to central server 102, and controller 170 communicates information from central server 102 to wind turbine 108.

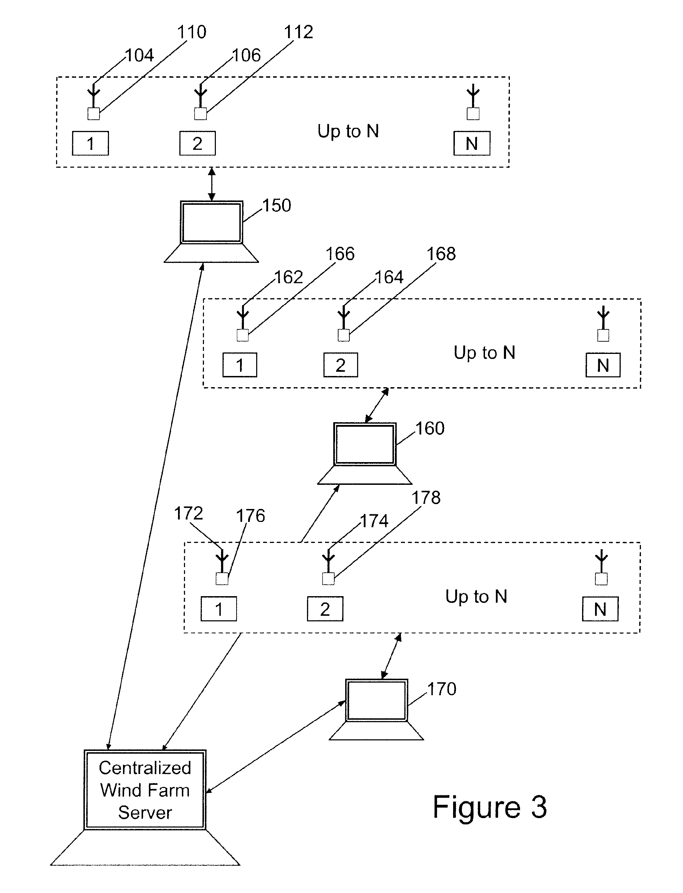

In a further embodiment, as shown in Figure 3, controllers 150, 160, and 170 may each be connected to a stand alone system. For example, controller 150 may be connected to a plurality of wind turbines (e.g., wind turbines 104 and 106), controller 160 may be connected to a plurality of wind turbines (e.g., wind turbines 162 and 164), and controller 170 may be connected to a plurality of wind turbines (e.g., wind turbines 172 and 174). Therefore, in this embodiment, each controller 150, 160, and 170 monitors an operation of its own stand alone system. For example, controller 150 receives information from sensors 110 and 112 of wind turbines 104 and 106 and controller 150 communicates information to wind turbines 104 and 106. Controller 160 communicates receives information from sensors 166 and 168 of wind turbines 162 and 164, and controller 160 communicates information to wind turbines 162 and 164. Controller 170 receives information from sensors 176 and 178 of wind turbines 172 and 174, and controller 170 communicates information to wind turbines 172 and 174. In a further embodiment, each of controllers 150, 160, and 170 may also be connected to central serer 102.

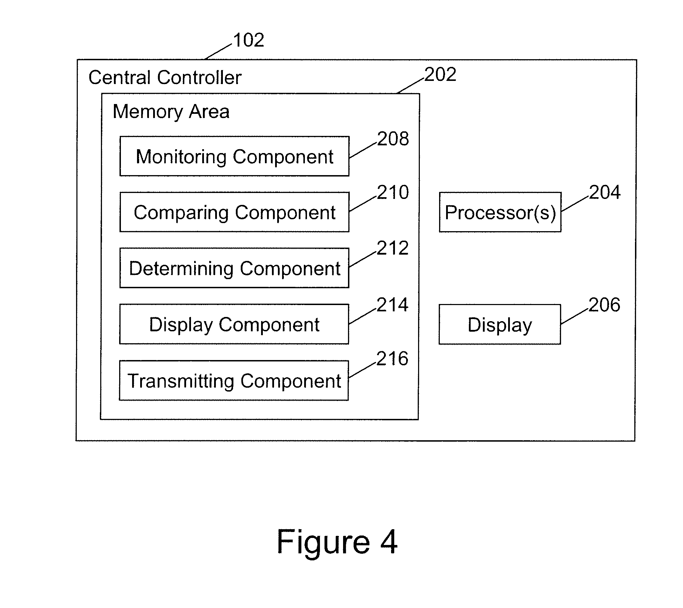

Figure 4 is an exemplary block diagram of central server 102 having a memory area 202 storing components for monitoring an operation of power system 100. Central server 202 may include a variety of computer-readable media. By way of example, and not limitation, computer-readable media may include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices, carrier wave or any other medium that can be used to encode desired information and is accessible via central server 202.

Central server 102 further includes a display 206 and at least one processor 204 that reads data from various entities, such as memory 202. Display 206 may be, for example, a capacitive touch screen display or other suitable display device. User input functionality is provided in display 206, which acts as a user input selection device. Display 206 is configured to be responsive to a user pressing contact on display 206 to selectively perform functionality. Display 206 may also include a keypad which operates in a conventional manner. Thus, a user can operate desired functions available with central server 102 by contacting a surface of display 206.

Memory area 202 further stores one or more computer-executable components. Exemplary computer-executable components include, without limitation, one or more of a monitoring component 208 (e.g., sensors and supporting hardware devices), a comparing component 210, a determining component 212, a display component 214, and a transmitting component 216. While the components are shown as stored in memory area 202, the components may be stored and/or executed from a memory area remote from central server 102. For example, the components may be stored by a cloud service, and the output of the execution of the components may be provided to central server 102. Such embodiments reduce the computational and storage burden on central server 102.

Processor 204 executes computer-executable instructions for implementing aspects described herein. For example, monitoring component 208 is executed by processor 204. Processor 204 receives a signal or accesses information corresponding to a parameter indicative of an environmental condition from each of a plurality of wind turbines, for example, wind turbines 104, 106, and 108. Processor 204 may be in communication with various turbine and generator controls (e.g., wind turbine controls 124, 126, and 128) such as a pitch control system, a torque control system, and/or a power control system, and as will be describe herein below, is configured to alter an operational state of a wind turbine based on signals received from central server 102. After a current state of an environmental condition has been received, comparing component 210 causes processor 204 to compare the environmental condition to a threshold level stored in memory area 202. Next, determining component 212 causes processor 204 to determine whether the compared environmental condition is one of above a first threshold level and below a second threshold level.

If, upon comparing, processor 204 determines that the environmental condition is one of above the first threshold level and below the second threshold level, transmitting component 216 causes processor 204 to transmit a change of operation request to each wind turbine that indicates that the environmental condition is one of above the first threshold level and below the second threshold level. For example, in response to high wind speeds (e.g., wind speeds approaching a threshold wind speed limit), a signal may be transmitted to a wind turbine to request that the wind turbine shut down, pitch the blades of the wind turbine toward stall (i.e. at 90 degrees to the wind direction), and/or feather the blades of the wind turbine (i.e. at 0 degrees to the wind direction), resulting in limited or minimal capture of wind energy by the blades.

One of ordinary skill in the art will appreciate that threshold limits for wind turbines generally vary from wind turbine to wind turbine, wind turbine location and what configurations are installed on a particular wind turbine. For example, the threshold limits for a 1.5MW wind turbine may be different from the threshold limits of 2.5MW wind turbine. Further, threshold limits of a 2.5MW wind turbine under "normal" weather conditions are different when compared to threshold limits of a 2.5MW wind turbine that is working in a CWE (cold weather extreme) conditions. As such, in one embodiment, each wind turbine may include standard threshold limits that are automatically configured by the manufacturer. In a further embodiment, a user can reconfigure the standard threshold values, or a user can create their own threshold values based on, for example, environmental conditions and locations of each wind turbine.

Further, the transmitted signal may request the wind turbine to curtail power output in an orderly or sequenced manner, request to maintain a desired rate of collective power output, and/or request a power down rate under high wind speed conditions. In a further embodiment, a shutdown operation may include mechanical braking of the turbine rotor. In one embodiment, a wind turbine is configured to anticipate when average wind speeds approach an unsafe wind speed limit, and communicate a signal to central server 102. The signal may be a request by the wind turbine to change an existing operational state. For example, in one embodiment, the request includes a shutdown request or a blade pitch request, a feather blade request, and/or a request to operate the wind turbine generator at a curtailed power output.

Display component 214, causes processor 204 to display monitored environmental conditions corresponding to each wind turbine presented on display 206. In particular, display component 214 displays an aggregate operational status of each wind turbine in power system 100. For example, a live plot of power system 100 may be displayed to a user. In one embodiment, to simplify a necessity of a user to check individual wind turbines, icons representative of each wind turbine in power system 100 may be shown with a visual indicator, such as a color code, that corresponds to an environmental condition level. Thus, once an unfavorable environmental condition (e.g., an environmental condition that is one of above the first threshold level and below the second threshold level) is determined, a wind turbine indicating or associated with the unfavorable environmental condition may be indicated by the color red on display 206, enabling a user to easily identify that particular wind turbine and an environmental condition associated therewith. Thus, a user is able to closely monitor an entire wind farm, or a particular wind turbine as a change in operation of the wind turbine is executed. Further, a user is able to quickly initiate a change in operation based on the live plot. For example, if a user is provided with a visual indication that a major component has failed, the user can quickly take control action and force a shutdown of a specific wind turbine or wind farm.

Further, if a wind turbine is approaching a threshold limit, the environmental condition may be indicated by the color yellow, or the color blue if a threat to exceed a threshold limit is low. Although a color code is described herein with respect to an indication of a current level of an environmental condition, one of ordinary skill in the art will appreciate that other visual indicators such as numbers, words, and/or symbols as well as audio indicators, such as an alarm, may also be used to identify a current level of an environmental condition to a user.

In a further embodiment, each of the environmental conditions (e.g. a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life) are listed on display 206, and each environmental condition corresponding to each wind turbine is identified with a visual indicator.

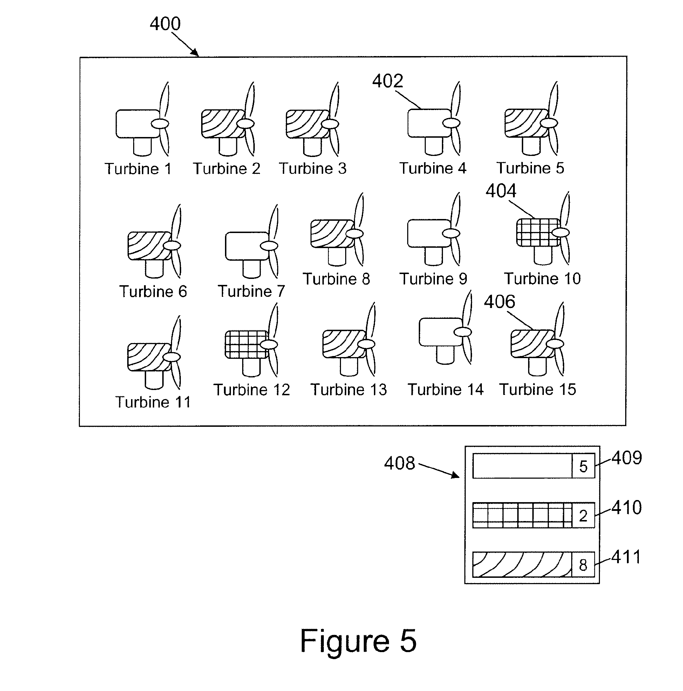

For example, exemplary display of a live plot of a wind farm is shown in Figure 5. Icons representative of each wind turbine in a power system is shown in Figure 5, and each icon is "filled" with one of three visual indicators, a solid indicator as shown at wind turbine 402, and cross hatching indicator as shown at wind turbine 404, and an indicator void of any color as shown at wind turbine 406. In this embodiment, the live plot provides information about a wind speed at each wind turbine. For example, a solid indicator as shown at wind turbine 402 indicates that wind turbine 402 is facing high wind speed. A cross hatching indicator as shown at wind turbine 404 indicates that wind turbine 404 is facing medium wind speed. An indicator void of any color as shown at wind turbine 406 indicates that wind turbine 406 is facing low wind speed. In addition to the icons, a wind farm level status 408 may also be provided. Wind farm level status 408 provides a user with, for example, a summary of the different levels of wind speeds and an indication of how many wind turbines in the wind farm are at each level. Threshold levels and/or wind speed ranges of low, medium, and high may be predefined based on, for example, a location of a wind farm. As shown in Figure 5, wind farm level status 408 includes a low wind speed indicator 409, a medium wind speed indicator 410, and high wind speed indicator 411 in one embodiment.

In the embodiments shown in Figures 2 and 3, similar to central server 102, controllers 150, 160, and 170 may also include a memory area storing components for monitoring an operation of power system 100, a variety of computer-readable media, a display, and at least one processor that reads data from various entities.

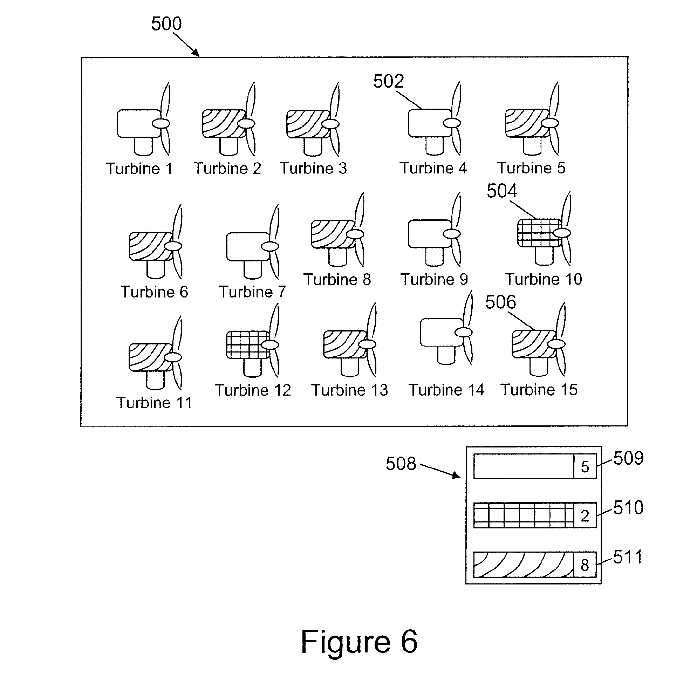

With reference now to Figure 6, an additional exemplary display of a live plot of a wind farm is illustrated. Icons representative of each wind turbine in a power system is shown in Figure 6 and each icon is "filled" with one of three visual indicators, a solid indicator as shown at wind turbine 502, and cross hatching indicator as shown at wind turbine 504, and an indicator void of any color as shown at wind turbine 506. In this embodiment, the live plot provides information about a thermal state of each wind turbine. For example, a solid indicator as shown at wind turbine 502 indicates that wind turbine 502 is at an unsafe thermal state and auto-shutdown has failed. A cross hatching indicator as shown at wind turbine 504 indicates that an auto-shutdown of wind turbine 504 is successful. An indicator void of any color as shown at wind turbine 506 indicates that wind turbine 506 is running normally. In addition to the icons, a wind farm level status 508 may also be provided. Wind farm level status 508 provides a user with, for example, a summary of the different levels of an operating state (e.g., a thermal state) of the wind turbines and an indication of how many wind turbines in the wind farm are at each level. Threshold levels and/or temperature ranges of low, medium, and high may be predefined based on, for example, a location of a wind farm. As shown in Figure 6, wind farm level status 508 includes normal running condition indicator 509, a successful auto-shutdown indicator 510, and an unsafe thermal state indicator 511 in one embodiment.

In a further embodiment, only one wind turbine is initially identified with a visual indicator. In this embodiment, a user may select a wind turbine, and upon selection, environmental conditions corresponding to each of a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life are displayed and identified with a visual indicator in a separate window, enabling a user to visually see a current status of each individual environmental condition at a glance.

In an alternative embodiment, a user may select one more environmental conditions corresponding to each of a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life, enabling a user to visually see the selected one or more environmental conditions for all of the wind turbines that they apply to.

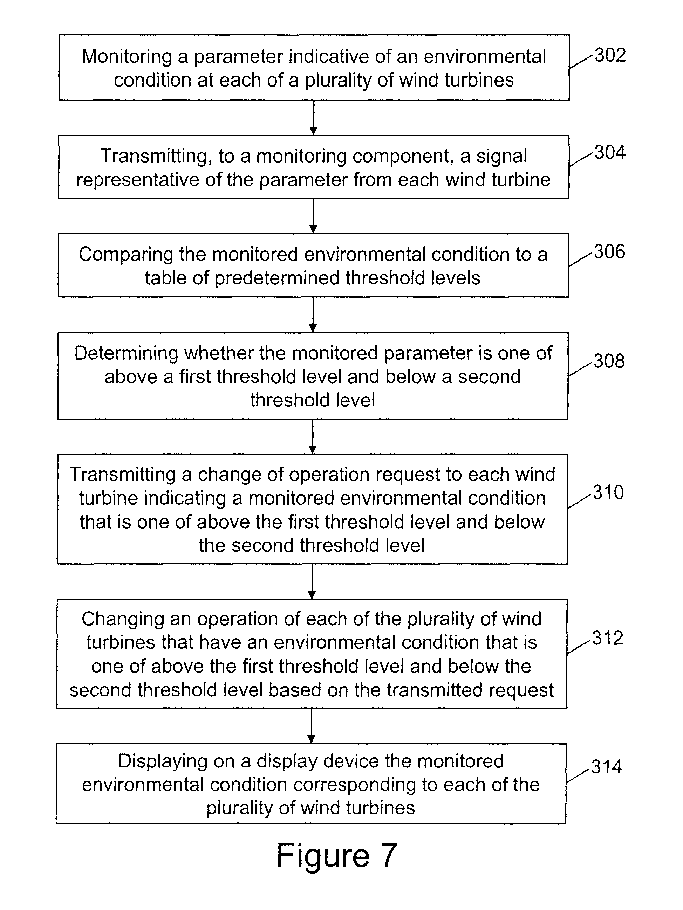

Referring next to Figure 7, a flow diagram of an exemplary method for monitoring an operation of power system 100 is shown. At 302, at least one parameter indicative of an environmental condition at each wind turbine (e.g., wind turbines 104, 106, and/or 108) is monitored. For example, at 304, a signal representative of a monitored environmental condition from each wind turbine is transmitted to central server 102, e.g., monitoring component 208, from each wind turbine 104, 106, and/or 108. In one embodiment, central server 102 receives information corresponding to a parameter indicative of a monitored environmental condition from each wind turbine. The transmitting and/or receiving of a monitored environmental condition may be executed in real time, in time intervals, and/or upon a request from a user. At 306, a monitored environmental condition is compared to a table of threshold levels. For example, after environmental condition information has been received by central server 102, the information is compared to one or more threshold levels stored in memory area 202 that correspond to the environmental condition. For example, a threshold level of wind speed may be categorized by a range, such as, high, medium, and low. A user may define wind speeds that fall within each category, or the wind speeds in each category may be pre-set by a manufacturer and/or a user. At 308, it is determined whether the monitored environmental condition is one of above a first threshold level and below a second threshold level. Thus, if the wind speed exceeds the high wind speed threshold category, at 310, a change of operation request is transmitted to at least one wind turbine that indicates and/or has a wind speed exceeding the high wind speed threshold. At 312, the operation is changed of each of the plurality of wind turbines that have an environmental condition that is one of above a first threshold level and below a second threshold level based on the transmitted request. As described above, an environmental condition may be a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life. Thus, changing an operation of each wind turbine may encompass decreasing at least one of a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life reaching a threshold limit.

At 314, the monitored environmental condition corresponding to each wind turbine is displayed on display 206. As described above, a live plot of power system 100 including icons representative of each wind turbine in power system 100 may be shown with visual indicators such as numbers, words, and/or symbols as well as audio indicators, such as an alarm, may be used to identify a current environmental condition to a user. Thus, once an unfavorable environmental condition (e.g., an environmental condition that exceeds a threshold level) is determined or identified, a wind turbine indicating or associated with the unfavorable environmental condition may be identified by a visual or audio indicator to a user on display 206.

A computer or computing device such as described herein has one or more processors or processing units, system memory, and some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules or other data. Communication media typically embody computer readable instructions, data structures, program modules, or other data in a modulated data signal such as a carrier wave or other transport mechanism and include any information delivery media. Combinations of any of the above are also included within the scope of computer readable media.

The computer may operate in a networked environment using logical connections to one or more remote computers, such as a remote computer. Although described in connection with an exemplary computing system environment, embodiments of the invention are operational with numerous other general purpose or special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the exemplary operating environment. Examples of well known computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Various aspects of the invention may be implemented with any number and organization of such components or modules. For example, aspects of the invention are not limited to the specific computer-executable instructions or the specific components or modules illustrated in the figures and described herein. Other embodiments of the invention may include different computer-executable instructions or components having more or less functionality than illustrated and described herein. Certain aspects of the invention may also be practiced in distributed computing environments where tasks are performed by remote processing devices that are linked through a communications network. In a distributed computing environment, program modules may be located in both local and remote computer storage media including memory storage devices.

Various aspects of the invention transform a general-purpose computer into a special-purpose computing device when configured to execute the instructions described herein.

The order of execution or performance of the operations in embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

When introducing elements of aspects of the invention or the embodiments thereof, the articles "a," "an," "the," and "said" are intended to mean that there are one or more of the elements. The terms "comprising," "including," and "having" are intended to be inclusive and mean that there may be additional elements other than the listed elements.

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for monitoring operation of a wind farm including a plurality of wind turbines, the method comprising:
   monitoring a parameter indicative of an environmental condition at each wind turbine of the plurality of wind turbines;
   transmitting, to a monitoring component, a signal representative of the parameter from each wind turbine;
   determining whether the monitored parameter is one of above a first threshold level and below a second threshold level; and
   displaying on a display device a live plot representative of the monitored environmental condition corresponding to each wind turbine.
2. A method in accordance with clause 1, wherein monitoring a parameter indicative of the environmental condition comprises monitoring at least one of the following: a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life.
3. A method in accordance with any preceding clause, wherein monitoring a parameter indicative of an environmental condition comprises sensing an environmental condition at each wind turbine.
4. A method in accordance with any preceding clause, further comprising comparing the monitored environmental condition to one or more threshold levels in a table of threshold levels.
5. A method in accordance with any preceding clause, further comprising transmitting a change of operation request to each wind turbine indicating a monitored environmental condition that is one of above the first threshold level and below the second threshold level.
6. A method in accordance with any preceding clause, further comprising changing an operation of each wind turbine indicating the monitored condition is one of above the first threshold level and below the second threshold level based on the transmitted change of operation request.
7. A method in accordance with any preceding clause, wherein changing an operation of each wind turbine comprises shutting down each wind turbine.
8. A method in accordance with any preceding clause, wherein changing an operation of each wind turbine comprises pitching at least one blade of each wind turbine.
9. A method in accordance with any preceding clause, wherein changing an operation of each wind turbine comprises feathering at least one blade of each wind turbine.
10. A system for monitoring operation of a wind farm comprising a plurality of wind turbines, the system comprising:
   a central server configured to operate the plurality of wind turbines, the central server comprising:
      a memory area for storing threshold tables; and,
      a processor programmed to:
   receive a signal representative of a parameter indicative of an environmental condition from each wind turbine of the plurality of wind turbines;
   compare a monitored environmental condition to one of a plurality of threshold levels for the environmental condition;
   determine whether the compared environmental condition is one of above a first threshold level and below a second threshold level; and
   transmit a change of operation request to each wind turbine indicating the monitored environmental condition is one of above the first threshold level and below the second threshold level.
11. A system in accordance with any preceding clause, further comprising a display device for displaying the monitored environmental condition corresponding to each wind turbine.
12. A system in accordance with any preceding clause, wherein the processor is further programmed to change, based on the transmitted change of operation request, the operation of each wind turbine that has an environmental condition exceeding one of the plurality of threshold levels for the environmental condition.
13. A system in accordance with any preceding clause, wherein the environmental condition is at least one of the following: a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life.
14. A system in accordance with any preceding clause, further comprising changing the operation of each wind turbine by shutting down each wind turbine.
15. A system in accordance with any preceding clause, further comprising changing the operation of each wind turbine by pitching at least one blade on each wind turbine.
16. A system in accordance with any preceding clause, further comprising changing the operation of each wind turbine by feathering at least one blade on each wind turbine.
17. A computer-readable media having computer-executable components, said components comprising:
   a monitoring component that when executed by at least one processor causes the processor to receive a signal representative of an environmental condition of each wind turbine of a plurality of wind turbines;
   a determining component that when executed by the processor causes the processor to determine whether the environmental condition is one of above a first threshold level and below a second threshold level;
   a display component that when executed by the processor causes the processor to display the monitored environmental condition corresponding to each wind turbine.
18. The computer-readable media in accordance with any preceding clause, wherein execution of the display component by the processor further causes the processor to display a live plot representative of the plurality of wind turbines and a monitored environmental condition for each wind turbine.
19. The computer-readable media in accordance with any preceding clause, wherein execution of the display component by the processor further causes the processor to display a visual identification of each wind turbine that has the environmental condition that is one of above the first threshold level and below the second threshold level.
20. The computer-readable media in accordance with any preceding clause, further comprising a transmitting component that when executed by the processor causes the processor to transmit a change of operation request to each wind turbine that indicates an environmental condition is one of above the first threshold level and below the second threshold level.
21. The computer-readable media in accordance with any preceding clause, wherein execution of the change of operation request includes at least one of the following: shutting down at least one wind turbine of the plurality of wind turbines; pitching at least one blade on at least one wind turbine of the plurality of wind turbines; and feathering at least one blade on at least one wind turbine of the plurality of wind turbines.

## Claims

1. A system (100) for monitoring operation of a wind farm comprising a plurality of wind turbines (104,106,108,162,164,172,402,404,502,504,506), the system comprising:
a central server (102) configured to operate the plurality of wind turbines, the central server comprising:
a memory area (202) for storing threshold tables; and,
a processor (130,132,134,204) programmed to:
receive a signal representative of a parameter indicative of an environmental condition from each wind turbine of the plurality of wind turbines;
compare a monitored environmental condition to one of a plurality of threshold levels for the environmental condition;
determine whether the compared environmental condition is one of above a first threshold level and below a second threshold level; and
transmit a change of operation request to each wind turbine indicating the monitored environmental condition is one of above the first threshold level and below the second threshold level.

2. A system (100) in accordance with claim 1, further comprising a display device for displaying the monitored environmental condition corresponding to each wind turbine (104,106,108,162,164,172,402,404,502,504,506).

3. A system (100) in accordance with any preceding claim, wherein the processor (130,132,134,204) is further programmed to change, based on the transmitted change of operation request, the operation of each wind turbine (104,106,108,162,164,172,402,404,502,504,506) that has an environmental condition exceeding one of the plurality of threshold levels for the environmental condition.

4. A system (100) in accordance with any preceding claim, wherein the environmental condition is at least one of the following: a wind speed, a turbine speed, a turbine power, a rate of change of turbine speed, a rate of change of turbine power, a blade pitch angle, a projected wind speed, a temperature of components, an external temperature, a pressure, a load, a number of shaft rotations per minute, and a component life.

5. A system (100) in accordance with any preceding claim, further comprising changing the operation of each wind turbine (104,106,108,162,164,172,402,404,502, 504,506) by shutting down each wind turbine.

6. A system (100) in accordance with any preceding claim, further comprising changing the operation of each wind turbine (104,106,108,162,164,172,402,404,502, 504,506) by pitching at least one blade on each wind turbine.

7. A system (100) in accordance with any preceding claim, further comprising changing the operation of each wind turbine (104,106,108,162,164,172,402,404,502,504,506) by feathering at least one blade on each wind turbine.

8. A computer-readable media having computer-executable components, said components comprising:
a monitoring component (208) that when executed by at least one processor (130,132,134,204) causes the processor to receive a signal representative of an environmental condition of each wind turbine of a plurality of wind turbines (104,106,108,162,164,172,402,404,502,504,506);
a determining component (212) that when executed by the processor causes the processor to determine whether the environmental condition is one of above a first threshold level and below a second threshold level;
a display component (214) that when executed by the processor causes the processor to display the monitored environmental condition corresponding to each wind turbine.

9. The computer-readable media in accordance with claim 8, wherein execution of the display component (214) by the processor (130,132,134,204) further causes the processor to display a live plot representative of the plurality of wind turbines (104,106,108,162,164,172,402,404,502,504,506) and a monitored environmental condition for each wind turbine.

10. The computer-readable media in accordance with claim 8 or claim 9, wherein execution of the display component (214) by the processor (130,132,134,204) further causes the processor to display a visual identification of each wind turbine (104,106,108,162,164,172,402,404,502,504,506) that has the environmental condition that is one of above the first threshold level and below the second threshold level.
